# EUROPEAN PATENT APPLICATION

(11) **EP 4 279 470 A1**
(43) Date of publication of application: **22.11.2023**
(21) Application number: 23170997.3
(22) Date of filing: 02.05.2023
(51) Int. Cl.: C04B 35/573, G02B 26/00, B32B 18/00

(54) **REACTION-BONDED SILICON-CARBIDE WITH IN-SITU FORMED SILICON LAYER FOR OPTICAL FINISHING**

(30) Priority: 18.05.2022 US 202217663956
(71) Applicant: II-VI Delaware, Inc., Wilmington, DE 19890 (US)
(72) Inventor: Wang, Jiwen, Wilmington, 19801 (US); Aghajanian, Mike, Wilmington, 19801 (US); Coombs, Nicholas, Wilmington, 19801 (US); COPPOLA, Jonathan, Wilmington, 19801 (US); Corona, Kayano, Wilmington, 19801 (US)
(74) Representative: Tegethoff, Sebastian

(57) **Abstract**

A mirror device includes a multi-phase substrate and a single-phase layer. The multi-phase layer is formed of reaction-bonded silicon-carbide (RB-SiC, or Si/SiC) material. The single-phase layer is formed of elemental silicon. The single-phase layer is formed in-situ, that is, contemporaneously with, the formation of RB-SiC material. The single-phase layer is integrally bonded, as one piece, to silicon of the multi-phase substrate. Methods of making a multi-layer device, such as a mirror device, are also described. One such method includes providing a porous mass of silicon carbide and carbon, causing molten elemental silicon to infiltrate the porous mass to form RB-SiC material, simultaneously causing the silicon to flow into a cavity to form a single-phase layer of polishable silicon, integrally bonding silicon in the cavity to the RB-SiC material, and, if desired, polishing a surface of the single-phase layer.

## Description

### Field of the Disclosure

The present disclosure relates to a mirror device which has a multi-phase substrate and a single-phase layer and to a method of making a multi-layer device, such as a mirror device.

### Background of the Disclosure

Reaction-bonded silicon-carbide (RB-SiC, or Si/SiC) material is a multi-phase material formed by reactive infiltration in which molten elemental silicon (Si) is brought into contact with a porous mass of interconnected silicon-carbide (SiC) particles plus carbon (C) in a vacuum or inert atmosphere. A wetting condition is created such that the molten silicon is pulled by capillary action into the mass of interconnected silicon-carbide particles and carbon, and the silicon reacts with the carbon in the mass to form additional silicon carbide. The resulting RB-SiC material contains primarily silicon carbide, but also unreacted, interconnected silicon.

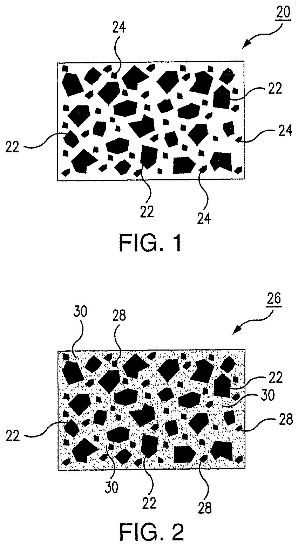

The infiltration process is illustrated in FIGS. 1 and 2. FIG. 1 is a schematic cross-sectional view of the porous mass (or preform) 20 which contains interconnected silicon-carbide particles 22 and carbon 24. FIG. 2 is a schematic cross-sectional view of the RB-SiC material (a ceramic material) 26 after infiltration by molten silicon, and subsequent cooling. The infiltration may occur in a vacuum or inert atmosphere. In the illustrated process, the molten silicon reactively infiltrates into the preform 20 (FIG. 1) such that the RB-SiC material 26 (FIG. 2) has a microstructure of three elements: (1) the original silicon-carbide particles 22; (2) reaction-formed silicon carbide (Si + C => SiC) 28, and (3) residual (unreacted) elemental silicon 30. The silicon 30 expands as it solidifies from its liquid state, such that the reacted, solidified three-component microstructure 22, 28, 30 is fully dense.

Thus, as the term is used herein, RB-SiC material is a fully dense, two-phase composite of silicon-carbide particles in a continuous silicon matrix. RB-SiC material is mentioned in United States Patent Application No. 17/248,309 (filed January 19, 2021) and United States Patent Publications Nos. 2021/0331985 (published October 28, 2021), 2018/0099379 (published April 12, 2018), and 2017/0291279 (published October 12, 2017). The entire disclosures of United States Patent Application No. 17/248,309 and United States Patent Publications Nos. 2021/0331985, 2018/0099379, and 2017/0291279 are incorporated herein, in their entireties, by reference.

### Summary of the Disclosure

The present disclosure relates to a mirror device which has a multi-phase substrate and a single-phase layer. The multi-phase layer is formed of reaction-bonded silicon-carbide (RB-SiC, or Si/SiC) material. The single-phase layer is formed of elemental silicon. Silicon located at a surface of the single-phase layer is integrally bonded, as one piece, to silicon at a surface of the multi-phase substrate. The single-phase layer may be in-situ formed in the sense that it is formed contemporaneously with (at the same time as) the formation of the RB-SiC material.

The present disclosure also relates to a method of making a multi-layer device, such as a mirror device. The method includes the steps of providing a porous mass of silicon carbide and carbon, causing molten elemental silicon to infiltrate the porous mass to form a multi-phase RB-SiC material, causing the molten silicon to flow into a cavity in the porous mass to form a single-phase layer of silicon, and integrally bonding, as one piece, silicon in the cavity to silicon in the RB-SiC material.

The present disclosure also relates to a method of making a mirror device, including the steps of: providing a porous mass of silicon carbide and carbon; causing molten elemental silicon to infiltrate the porous mass to form a multi-phase RB-SiC material; causing the silicon to flow into a cavity in the porous mass to form a single-phase layer of elemental silicon; and then polishing a surface of the single-phase layer.

### Brief description of the drawings

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 is a schematic cross-sectional view of an example of a preform material for a substrate constructed in accordance with the present disclosure;
FIG. 2 is a schematic cross-sectional view of a reaction-bonded silicon-carbide material made from the preform material of FIG. 1;
FIG. 3 is a top view of an example of a mirror device constructed in accordance with the present disclosure.
FIG. 4 is a cross-sectional view of the mirror device illustrated in FIG. 3, taken along line 4-4 of FIG. 3;
FIG. 5 is a bottom view of the mirror device illustrated in FIG. 3;
FIG. 6 is a cross-sectional view of an example of a non-machined preform constructed in accordance with the present disclosure;
FIG. 7 is a cross-sectional view of an example of a machined preform made from the non-machined preform illustrated in FIG. 6;
FIG. 8 is a cross-sectional view of the machined preform illustrated in FIG. 7, at the start of a silicon infiltration process;
FIG. 9 is a cross-sectional view of the machined preform illustrated in FIGS. 7 and 8, after the infiltration process;
FIG. 10 is a cross-sectional view of another example of a machined preform made from the non-machined preform illustrated in FIG. 6, at the start of an infiltration process;
FIG. 11 is a cross-sectional view of another example of a machined preform made from the non-machined preform illustrated in FIG. 6, at the start of an infiltration process; and
FIG. 12 is a copy of a photomicrograph showing a portion of the cross-section illustrated in FIG. 9, in the region of box 12 of FIG. 9.

Throughout the drawings, like elements are designated by like reference numerals and other characters. The drawings show non-limiting examples for purposes of illustration and explanation of the present disclosure, and are not drawn to scale.

### Detailed Description

The technical problem is solved by the independent claims. The dependent claims cover further specific embodiments of the invention.

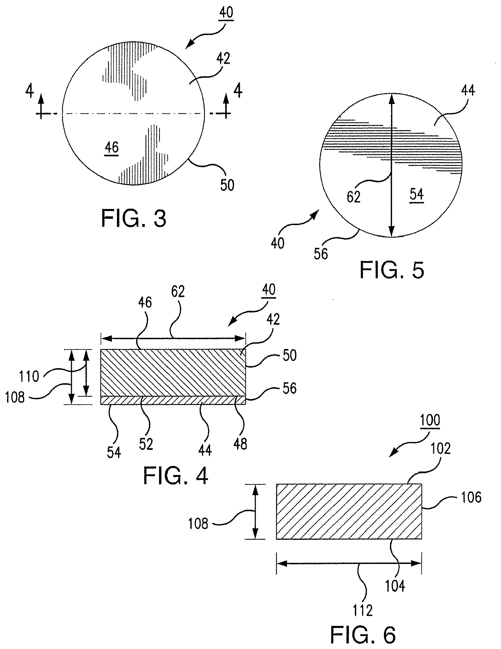

FIGS. 3-5 show an example of a mirror device 40 constructed in accordance with the present disclosure. The device 40 includes a disk-shaped substrate 42 of reaction-bonded silicon-carbide (RB-SiC, or Si/SiC) material and a disk-shaped layer 44 (FIG. 4) of elemental silicon (Si). The substrate 42 has a top surface 46, a bottom surface 48, and a cylindrical outer wall 50. The silicon layer 44 has a top surface 52, a bottom surface 54, and a cylindrical outer wall 56. Although the composite outer wall 50, 56 of the illustrated device 40 is cylindrical, the present disclosure also relates to devices having other configurations.

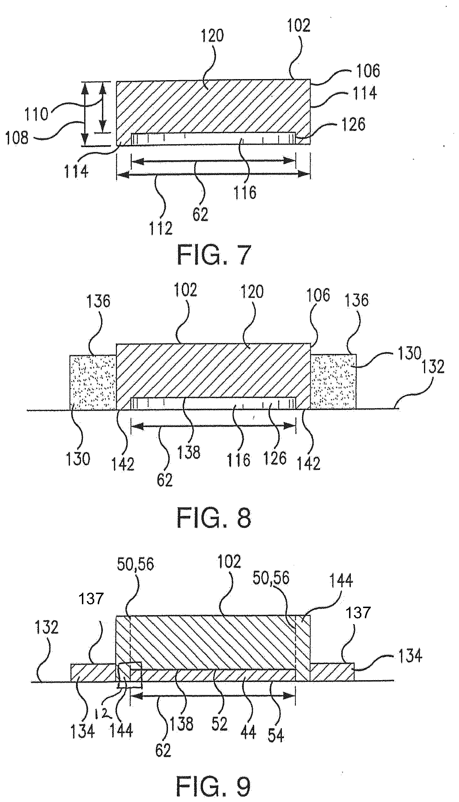

The single-phase, silicon layer 44 (FIGS. 4 and 5) is formed by flowing molten elemental silicon through a machined preform 120 (FIG. 7). Solidification of the silicon causes the top surface 52 (FIG. 4) of the silicon layer 44 to be integrally connected, as one piece, to the bottom surface 48 of the substrate 42. In the illustrated device 40, the cylindrical walls 50, 56 are aligned with each other to define the composite outer wall 50, 56, such that there is no RB-SiC material, or silicon carbide, radially outside of the outer wall 56 of the silicon layer 44. The diameter 62 of the disk-shaped substrate 42 is the same as the diameter 62 of the disk-shaped silicon layer 44. The bottom surface 54 of the silicon layer 44 may be polished to form an optically reflective mirror.

A method of making the mirror device 40 is illustrated in FIGS. 6-9. An unmachined (green) preform 100 (FIG. 6) may be provided at a first stage of the method. The unmachined preform 100 may be a cylindrical, porous mass of the interconnected silicon-carbide (SiC) particles 22 and carbon (C) 24 illustrated in FIG. 1. The unmachined preform 100 (FIG. 6) has a top surface 102, a bottom surface 104, and a cylindrical outer wall 106. The height 108 of the unmachined preform 100, from the top surface 102 to the bottom surface 104, is greater than the height 110 (FIG. 4) of the substrate 42, and the diameter 112 (FIG. 6) of the unmachined preform 100 is greater than the diameter 62 of the substrate 42.

A cylindrical cavity 116 (FIG. 7) may be machined into the bottom surface 104 (FIG. 6) of the non-machined preform 100 to produce the machined preform 120 illustrated in FIG. 7. The diameter 112 of the machined preform 120 may be the same as the diameter 112 (FIG. 6) of the unmachined preform 100. In the illustrated configuration, the cylindrical cavity 116 defines the bottom surface 48 of the substrate 42 (FIG. 4), and the diameter 62 of the cylindrical cavity 116 (FIG. 7) may be the same as the diameter 62 (FIG. 4) of the substrate 42. The cavity 116 may have any suitable shape, including flat (that is, planar) and non-planar (including spherical and aspherical), to match a desired mirror curvature. A cylindrical periphery 126 of the cavity 116 is surrounded, and defined, by a ring-shaped portion 114 of the machined preform 120. The preform 120 illustrated in FIG. 7 is an integral (one-piece) mass of the porous material illustrated in FIGS. 1 and 6.

Next, referring now to FIG. 8, elemental silicon (raw material) 130, which may be in the form of granules, particles, and/or powder, is located around, and surrounds, the outer wall 106 of the machined preform 120. The top surface 136 of the raw material 130 is higher than the top surface 138 of the cavity 116. The preform 120 and the silicon 130 are supported on a suitable, common surface 132. Next, under vacuum or an inert atmosphere, heat is applied to melt the silicon 130 such that molten silicon infiltrates the preform 120 by capillary action, and flows through the preform 120 and fills the cylindrical cavity 116. A portion of the molten silicon reacts and solidifies within the machined preform 120 so that all, or essentially all, of the preform 120 is converted to RB-SiC material. Another portion of the molten silicon passes through porosities in the preform 120 and fills and solidifies within the cavity 116 to form the silicon layer 44 (FIG. 9). If desired, the cavity 116 may be completely filled with elemental silicon, with no gaps or pores in an interface between the silicon and the bottom surface 48 of the RB-SiC material.

An excess amount 134 of silicon remains outside the preform 120. In the illustrated process, the top surface 137 of the molten silicon 134 outside the preform 120, at each stage of the process, is higher than the top surface 138 of the cavity 116, to provide sufficient metallostatic pressure to ensure that the cavity 116 is completely filled with elemental silicon. The thickness of the silicon layer 44 may be controlled by, and equal to, the depth of the cavity 116, which may be as deep as desired. Thus, the infiltration process may be set up such that the level 137 of the molten silicon bath 134 surrounding the preform 120 is always above that of the cavity top surface 138 to provide the desired metallostatic head for inducing molten silicon to flow through the preform 120 and into the cavity 116 until the cavity 116 is filled.

The configuration of the machined preform 120, and the creation of an effective seal between the ring-shaped bottom 142 of the preform 120 and the common surface 132, causes all, or substantially all, of the molten silicon that enters the cavity 116 to first infiltrate through the preform 120. This infiltration-to-filling process allows the porous mass of the preform 120 to filter contaminants, such as oxide skins (corrosion products and other contaminants), from the raw material 130. The contaminants remain in the preform 120, and become solidified within the RB-SiC material of the substrate 42, where the contaminants cause no harm. According to this infiltration-to-filling process, contaminants in the raw material 130 do not make it to the bottom surface 54 of the silicon layer 44, which may be polished. As a result, contaminants that may be present in the raw material 130 do not adversely affect the quality of the surface 54.

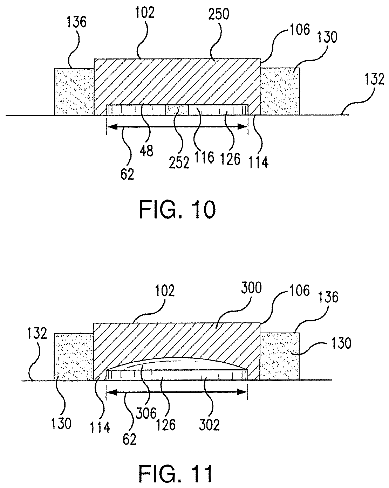

If desired, however, a machined preform may be provided with slots 252 (FIG. 10) in the bottom ring-shaped portion for enhanced metal (silicon) flow. An example of a preform 250 with such slots 252 is illustrated in FIG. 10. There may be one, two, three, or more such slots 252 forming passageways into the cylindrical cavity 116 to permit at least some molten silicon to flow directly into the cavity 116 through the slots 252 without being first filtered through the preform material. The configuration shown in FIG. 10 does not provide as much filtration as the configuration shown in FIG. 8, but may be desirable where more rapid flow of silicon into the cavity 116 is considered a priority over contaminant filtration.

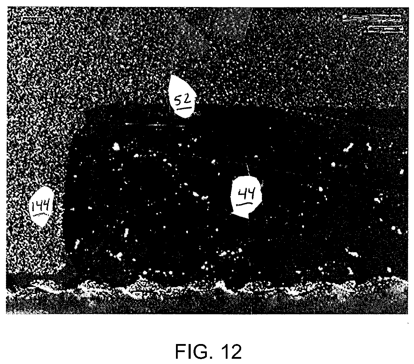

Referring again to FIG. 9, after the silicon within the cavity 116 is solidified, an outer-ring portion 144 of the newly-formed RB-SiC material (that is, all of the RB-SiC material located radially outside of what becomes the composite outside surface 50, 56, represented by broken lines in FIG. 9) is removed. In the configuration illustrated in FIG. 12, the silicon layer 44 is not yet polished. The bottom surface 54 (FIG. 9) of the silicon layer 44 may be polished to produce the mirror device 40.

The RB-SiC material of the mirror device 40 has a low thermal coefficient of expansion, a high thermal conductivity, low density, and high stiffness. The RB-SiC material may be especially well-adapted for certain precision-device markets, including for use within devices for making semiconductor equipment, and within optical substrates and housings. However, the RB-SiC material is a two-phase composite of silicon carbide and silicon, which limits its ability to be polished to a mirror finish. Optical polishing is preferably performed with a consistent rate of removal of microstructural material which is more easily achieved when the material to be polished is a single-phase material.

An advantage of the present disclosure is that, unlike the RB-SiC material, the elemental silicon of the single-phase layer 44 can be readily polished to optical specifications. Consequently, it may not be necessary to clad or otherwise provide the mirror device 40 with another polishable material, such as nickel plate, chemical vapor deposited (CVD) silicon-carbide, or plasma-enhanced CVD (PECVD) silicon. The presence of the in-situ-formed silicon layer 44 may eliminate the need for a cladding step, such that the mirror device 40 can be efficiently produced, with a reduced cycle time.

Moreover, the present disclosure permits the formation of a thick in-situ silicon layer 44, which provides for sufficient stock to machine or polish a non-flat mirror surface. The thickness of the elemental silicon layer 44, between the top and polished surfaces 52, 54 may be, for example, at least 0.5 mm. It would be difficult or impossible to form a cladding layer of nickel plate, CVD silicon-carbide, or PECVD silicon with a comparably large thickness.

FIG. 11 illustrates another machined preform 300 formed from the non-machined preform 100, where a domed cavity 302 is machined into the bottom surface 104 of the unmachined preform 100. In the illustrated configuration, the domed cavity 302 defines a semispherical (an example of a non-planar) bottom surface of a substrate, and the diameter 62 of the domed cavity 302 may be the same as the diameter 62 of the substrate.

The illustrated cavity 302 may have a non-planar, concave-downward top surface 306, to match a desired non-planar mirror curvature. A cylindrical periphery 126 of the cavity 302 is surrounded, and defined, by a ring-shaped portion 114 of the machined preform 300. The preform 300 is an integral (one-piece) mass of the porous material illustrated in FIGS. 1 and 6. After infiltration, and before polishing to form the desired mirror surface, the ring-shaped portion 114 may be removed from the rest of the RB-SiC material by a suitable machining process.

The infiltration process may be performed to fill the cavity 302 with elemental silicon. The resulting planar lower surface of the solidified silicon layer may then be polished to be non-planar, and concave downward (that is, with the same direction of concavity as the top surface 306), and with a thickness that is, for example, at least 0.5 mm, at least 1.0 mm, at least 1.5 mm, at least 2.0 mm, or at least 2.5 mm.

In summary, the present disclosure relates to a RB-SiC body with an in-situ formed silicon surface layer suited to optical polishing for precision mirror applications. Due to the close match between elemental silicon and RB-SiC material in terms of coefficient of thermal expansion (CTE), an in-situ formed assembly of the type described herein can be stably operated without substantial temperature-induced stress, which makes the assembly well suited to applications involving thermal cycling.

Infiltration by itself provides no mechanism for a substantial silicon film to form or grow on the surface of RB-SiC material. By providing the cavity 116 and allowing it to be filled during infiltration, single-phase silicon material with a sufficient thickness to form a suitably polished mirror can be provided.

Compared to pure silicon, RB-SiC material has much greater stiffness, fracture toughness, strength, thermal conductivity, and wear resistance. Thus, a mirror device with a RB-SiC substrate but a polished silicon surface provides many performance advantages over a mirror formed solely of silicon. The present disclosure is applicable to the production of high-performance mirrors, including galvo mirrors for precisely directing laser beams, other laser-related mirrors, space mirrors, stage locating mirrors, and high-energy laser (HEL) mirrors.

The present application is also applicable to environments where ceramic properties are desirable but a smooth, single-phase, lower-hardness surface is needed for tribological reasons, such as for chemical seals, automotive devices, including piston liners, piston pins, and rockers, and devices for semiconductor-device manufacturing, such as a wafer boat with a silicon surface for preventing or reducing wafer scratching.

The present disclosure is also applicable to environments where ceramic properties are desired, or necessary, but relatively soft surface material is preferred for ease of machining, such as local regions of silicon in which threads are formed by machining.

## Claims

1. A mirror device comprising:
- a multi-phase substrate including reaction-bonded silicon-carbide material, wherein the multi-phase substrate has a first surface and a second surface; and
- a single-phase layer including elemental silicon, wherein the single-phase layer has a first surface and a polished surface; and
wherein silicon located at the first surface of the single-phase layer is integrally bonded, as one piece, to silicon at the second surface of the multi-phase substrate.

2. The mirror device of claim 1, wherein the single-phase layer is formed by causing the elemental silicon to infiltrate and pass through a porous mass of interconnected silicon carbide and carbon.

3. The mirror device of claim 1, wherein the multi-phase substrate and the single-phase layer are cylindrical and the polished surface is circular.

4. The mirror device of claim 1, wherein the polished surface is planar.

5. The mirror device of claim 4, wherein the second surface of the substrate is planar, and parallel to the polished surface.

6. The mirror device of claim 1, wherein the polished surface is non-planar.

7. The mirror device of claim 6, wherein the polished surface and the second surface of the substrate have a common direction of concavity.

8. A method of making a device, comprising:
- providing a porous mass of silicon carbide and carbon;
- causing molten elemental silicon to infiltrate the porous mass to form a multi-phase reaction-bonded silicon-carbide material;
- causing the molten elemental silicon to flow into a cavity in the porous mass to form a single-phase layer of elemental silicon; and
- integrally bonding, as one piece, silicon in the cavity to silicon in the reaction-bonded silicon-carbide material.

9. The method of claim 8, further comprising forming the cavity by a machining process before causing the molten elemental silicon to infiltrate the porous mass.

10. The method of claim 8, further comprising maintaining a metallostatic head to cause the molten elemental silicon to fill the cavity.

11. The method of claim 10, wherein elemental silicon within the cavity has a thickness of at least 0.5 mm.

12. The method of claim 8, further comprising using the porous mass of silicon carbon and carbon to remove contaminants from the molten elemental silicon before the molten elemental silicon flows into the cavity.

13. The method of claim 8, further comprising polishing the single-phase layer of elemental silicon.

14. A method of making a mirror device, comprising:
- providing a porous mass of silicon carbide and carbon;
- causing molten elemental silicon to infiltrate the porous mass to form a multi-phase reaction-bonded silicon-carbide material;
- causing the molten elemental silicon to flow into a cavity in the porous mass to form a single-phase layer of elemental silicon; and
- subsequently polishing a surface of the single-phase layer of elemental silicon.

15. The method of claim 14, further comprising removing a portion of the reaction-bonded silicon-carbide material from around the single-phase layer of elemental silicon before polishing the surface of the single-phase layer.

16. The method of claim 15, further comprising forming a planar mirror surface by polishing the single-phase layer.

17. The method of claim 15, further comprising forming a non-planar mirror surface by polishing the single-phase layer.
